## Europäisches Patentamt

## European Patent Office

## Office européen des brevets

(11) Veröffentlichungsnummer: **0 273 255 B1**

(12) **EUROPÄISCHE PATENTSCHRIFT**

(45) Veröffentlichungstag der Patentschrift: **07.08.91**

(51) Int. Cl.⁵: **H02H 3/33, H02H 1/04**

(21) Anmeldenummer: **87118234.1**

(22) Anmeldetag: **09.12.87**

(54) **Differenzstromschutzschalter.**

(30) Priorität: **22.12.86 DE 3643981**

(43) Veröffentlichungstag der Anmeldung:
**06.07.88 Patentblatt 88/27**

(45) Bekanntmachung des Hinweises auf die
Patenterteilung:
**07.08.91 Patentblatt 91/32**

(84) Benannte Vertragsstaaten:
**AT BE CH DE ES FR GB IT LI NL**

(56) Entgegenhaltungen:
**EP-A- 0 167 079**
**DE-A- 3 429 381**
**FR-A- 2 538 179**

(73) Patentinhaber: **Siemens Aktiengesellschaft**
**Wittelsbacherplatz 2**
**W-8000 München 2(DE)**

(72) Erfinder: **Pohl, Fritz, Dipl.-Phys.**
**Ahornweg 8**
**W-8551 Hemhofen(DE)**
Erfinder: **Harr, Dieter, Dipl.-Ing.**
**Friedrich-Ebert-Strasse 63**
**W-8400 Regensburg(DE)**

## Beschreibung

Die Erfindung bezieht sich auf einen Differenzstromschutzschalter nach dem Prinzip der Transduktorschaltung, im einzelnen nach Gattungsbegriff von Patentanspruch 1. Die Sekundärwicklung ist mit einem komplexen, überwiegend kapazitiven Meßwiderstand in Serienschaltung an einen Rechteckgenerator angeschlossen. An einem Abgriff ist eine Auswerteschaltung angeschlossen, die über eine Auslöseeinrichtung und ein Schaltschloß eine Schaltkontaktvorrichtung betätigt. Ein derartiger Differenzstromschutzschalter ist bekannt (DE-A-3 424 959).

Bei einem derartigen Differenzstromschutzschalter wird die Sekundärwicklung einer Transduktorschaltung bzw. eines Summenstromwandlers durch eine angelegte hochfrequente Wechselspannung bis nahe an die Sättigungsgrenze wechselmagnetisiert. Wenn durch die Primärwicklung ein Differenzstrom fließt, wird im Summenstromwandler ein Magnetfeld überlagert, das bei gleicher Richtung mit dem angelegten Feld die Sättigungsgrenze des Wandlers überschreitet, so daß der induktive Widerstand der Sekundärwicklung kleiner wird. In einem Meßwiderstand, der in Serienschaltung zur Sekundärwicklung angeordnet ist, steht dann vom Rechteckgenerator ein höheres Potential gegen Bezugspotential an. Dabei wird auch die Spannungsamplitude am Meßwiderstand größer, so daß in einer Auswerteschaltung diese mit einer eingestellten Schwellspannung verglichen werden kann und bei Überschreiten der Schwellspannung eine Auslöseeinrichtung zu aktivieren ist und die zu überwachenden Leitungen unterbrochen werden. Ein derartiger Differenzstromschutzschalter kann auf alle Arten von Fehlerströmen ansprechen, also außer auf Wechselströme auch auf Fehlerströme mit Gleichstromkomponenten und auf glatten Gleichstromfehlerstrom. Ein derartiger Differenzstromschutzschalter ist also für Allstrom empfindlich.

Durch den komplexen, überwiegend kapazitiven Meßwiderstand kann man in Abstimmung auf die Frequenz des Rechteckgenerators mit so wenigen Primärwicklungen auskommen, daß die Wärme vom Summenstromwandler leicht abgeführt werden kann, weshalb man mit wenig Platz auskommt und kleine Schutzschalter bauen kann (DE-A-3 424 959).

Bei derartigen empfindlichen Differenzstromschutzschaltern tritt das Problem auf, daß sie auch bei Stoßströmen bzw. Stoßspannungen zu Fehlauslösungen neigen. Um die Stoßstromfestigkeit zu erhöhen, ist es bekannt (DE-A-3 429 381), eine Spannungsbegrenzung und nachfolgende Integration vorzusehen. Hierzu ist zwischen Sekundärwicklung und einem dem Meßwiderstand vorgeschalteten Dämpfungswiderstand eine Zenerdiode gegen Bezugspotential eingeschaltet. Dennoch befriedigt die Stoßstromfestigkeit hohe Anforderungen mitunter nicht.

Der Erfindung liegt die Erkenntnis zugrunde, daß bei ferromagnetischen Materialien eine hohe magnetische Sättigungserregung für kurze Zeit in der Größenordnung von etwa 10 bis 30 ms eine gegenüber dem stationären Betrieb erhöhte Remanenzinduktion hinterläßt. Es wurde nun erkannt, daß der Schutzschalter deshalb auslösen kann, weil der induktive Widerstand der Sekundärwicklung während der erhöhten Remanenzinduktion erniedrigt wird und das Spannungssignal am Meßwiderstand sich daher erhöht. Auch bei einem weiteren bekannten Differenzstromschutzschalter arbeitet man mit der Unterdrückung von Stoßströmen, die durch Ferneinschläge von Blitzen und durch Schaltvorgänge in Versorgungsnetzen verursacht werden.

Der Erfindung liegt die Aufgabe zugrunde, einen Differenzstromschutzschalter zu entwickeln, der gegen Fehlauslösung bei Stoßströmen noch sicherer geschützt ist.

Die Lösung der geschilderten Aufgabe besteht nach der Erfindung darin, daß die Auswerteschaltung durch eine für Stoßströme bzw. Stoßspannungen ansprechenden Sensor während der Zeit des Ansprechens durch einen vom Sensor gesteuerte Sperre in der Auslösung gesperrt wird. Dadurch wird anders als bisher nicht der Stoßstrom bzw. die Stoßspannung abgeleitet oder in ihren Folgen gedämpft, sondern der Stoßstrom bzw. die Stoßspannung werden unmittelbar dazu herangezogen, die Auslösung des Schutzschalters zu sperren. Dadurch ist sichergestellt, daß jegliche Art der Beeinträchtigung des Auslöseverhaltens durch Stoßströme unterbunden wird.

Die Sperrung kann dadurch erfolgen, daß die Signalverarbeitung zwischen Sekundärwicklung und Auslöseeinrichtung unterbrochen wird. Nach einer Gattung von Ausführungsbeispielen weist die Auswerteschaltung eine erste Stufe aus Gleichrichter und Integrierglied und eine nachgeschaltete zweite Stufe aus Schwellwertschalter auf, zwischen denen ein gegen Bezugspotential schaltbarer Koppelschalter als Sensor und Sperre zwischengeschaltet ist, der vom Potential, abgegriffen zwischen Rechteckgenerator und dem komplexen Widerstand, gesteuert wird. Der Koppelschalter kann ein Optokoppler sein, der in seinem Steuerkreis als Sensor für Stoßströme wirkt und der an seinem Arbeitsausgang den Kondensator des Integriergliedes der ersten Stufe entlädt. Da der Schwellwertschalter in der zweiten Stufe dann nicht ansprechen kann, ist die Auswerteschaltung durch das Ansprechen des Sensors so lange gesperrt, bis der Optokoppler wieder zwischen seinen Arbeitsausgängen gesperrt ist.

Ein Optokoppelelement hat den Vorteil, daß zwischen Steuer-und Arbeitsseite eine vollständige Potentialtrennung herrscht, so daß auch hohe Stoßströme sekundärseitig nicht zu Spannungsverschleppungen führen kann. Ein Optokoppelelement eignet sich also als Sensor für sehr hohe und sehr steile Stoßströme.

Der Koppelschalter kann mit einem Optokoppelelement arbeiten, das vom Stromfluß infolge der Spannung zwischen einem Potential, abgegriffen zwischen Rechteckgenerator und Sekundärwicklung, und Bezugspotential gesteuert wird. Das Potential kann auch zwischen Sekundärwicklung und einem Dämpfungswiderstand für ein Optokoppelelement abgegriffen werden.

Wenn man das Steuerpotential als Differenzspannung an der Sekundärwicklung abgreift und einem Koppelschalter zweipolig zuführt, kann man einem größeren Signalhub, der von einem Stoßstrom herrührt, zum Steuern des Koppelschalters nutzen. Dadurch können auch bei kleineren Stoßströmen Fehlauslösungen des Differenzstromschutzschalters vermieden werden.

Der Koppelschalter kann im Steuerkreis des Optokoppelelements eine Schaltung aus Zweiweggegleichrichter, Spannungsschwelle, RC-Glied und Speicherkondensator sowie Strombegrenzungswiderstand aufweisen und im Lastkreis des Optokoppelelements einen Strom- bzw. Spannungsbegrenzer angeordnet haben. Dieser Ausgang ist zwischen dem Gleichrichter und Integrierglied einerseits und dem Schwellwertschalter der Auswerteschaltung andererseits zwischengeschaltet. Wenn das Optokoppelelement angesprochen hat, wird der Kondensator des Integriergliedes über die Strombzw. Spannungsbegrenzung entladen und der Schwellwertschalter der Auswerteschaltung kann während der Sperrzeit nicht ansprechen.

Die Erfindung soll nun anhand von in der Zeichnung grob schematisch wiedergegebenen Ausführungsbeispielen näher erläutert werden:

In Fig. 1 ist ein Differenzstromschutzschalter mit Koppelschalter in zwei Schaltungsvarianten veranschaulicht.

In Fig. 2 ist im Sekundärkreis des Summenstromwandlers ein Ausführungsbeispiel für einen Koppelschalter in Verbindung mit der Auswertschaltung des Schutzschalters wiedergegeben.

In Fig. 3 ist ein Differenzstromschutzschalter nach Fig. 1 wiedergegeben, dessen Koppelschalter von der Sekundärwicklung ein Differenzsignal zugeführt wird.

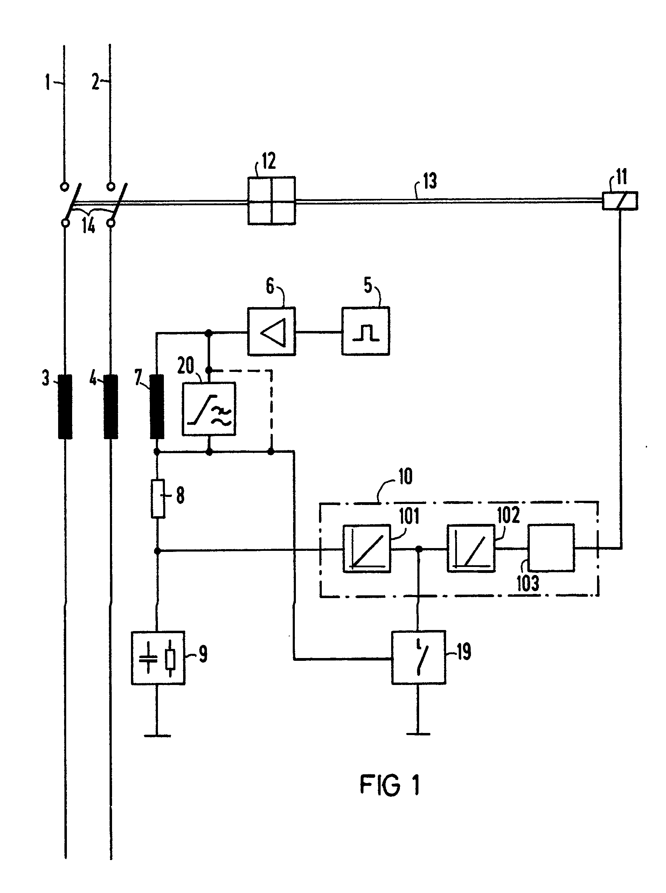

Der Schutzschalter nach Fig. 1 überwacht einen Außenleiter 1 und einen Mittelpunktsleiter 2, die jeweils eine Primärwicklung 3 und 4 des Steuerkreises einer Transduktorschaltung bzw. eines Summenstromwandlers bilden. Die Primärwicklungen 3 und 4 können als bloße Durchführung des Außenleiters 1 und des Mittelpunktsleiters 2 durch einen Summenstromwandler ausgeführt sein. Ein Rechteckgenerator 5 steht über einem Verstärker 6 mit der Sekundärwicklung 7 der Transduktorschaltung bzw. des Summenstromwandlers in Verbindung. Am Ausgang der Sekundärwicklung 7 ist in Serienschaltung ein ohmscher Dämpfungswiderstand 8 und ein komplexer, überwiegend kapazitiver Meßwiderstand 9 verbunden. Der zweite Anschluß des Meßwiderstandes 9 liegt an Bezugspotential, im Ausführungsbeispiel an Nullpotential. Der komplexe Meßwiderstand 9 kann im wesentlichen ein technischer Kondensator sein. Der ohmsche Widerstand kann sich als Nebeneffekt eines technischen Kondensators ergeben.

Mit einem Abgriff zwischen Sekundärwicklung 7 und Meßwiderstand 9, im Ausführungsbeispiel hinter dem Dämpfungswiderstand 8 der Sekundärwicklung 7, ist eine Auswerteschaltung 10 verbunden. Sie weist in Serienschaltung im wesentlichen ein Gleichrichter- und Integrierglied 101 und eine nachgeschaltete zweite Stufe aus Schwellwertschalter 102 auf, dem ein Auswerteglied 103 nachgeschaltet ist. Wenn der Koppelschalter 19, der mit seinen Arbeitsausgängen zwischen Bezugspotential einerseits und zwischen Gleichrichter und Integrierglied 101 sowie Schwellwertschalter 102 andererseits eingeschaltet ist, nicht anspricht, kann bei Fehlerströmen das Auswerteglied 103 die Auslösevorrichtung 11 zum Ansprechen bringen, so daß über eine Wirkverbindung 13 und ein Schaltschloß 12 die Kontaktvorrichtung 14 in den zu schützenden Leitungen geöffnet wird.

Der Koppelschalter 19, der in der wiedergegebenen Schaltung als Sensor und Sperre wirkt, ist steuerseitig nach dem in durchgezogener Linienführung wiedergegebenen Ausführungsbeispiel zwischen Sekundärwicklung 7 und Dämpfungswiderstand 8 angeschlossen. Nach dem Ausführungsbeispiel in gestrichelter Linienführung ist der Koppelschalter steuerseitig zwischen dem Verstärker 6 und der Sekundärwicklung 7 angeschlossen. Ein zur Sekundärwicklung parallel liegendes Filterelement 20, im Ausführungsbeispiel ein Tiefpaßfilter mit parallel geschaltetem Spannungsbegrenzer, hält sekundäre Signale mit tiefen Frequenzen vom Koppelschalter 19 fern, so daß der Differenzstromschutzschalter sofort auslösen kann. Bei Stoßströmen mit hohen Frequenzen, die üblicherweise zu Fehlauslösungen führen, wird die Auswerteschaltung 10 dagegen gesperrt. Nach dem in gestrichelter Linienführung veranschaulichten zweiten Ausführungsbeispiel nach Fig. 1 ist die durchgezogen wiedergebene Verbindungsleitung zwischen dem Filterelement 20 und dem Anschluß der gestrichelt wiedergegebenen Leitung unterbrochen.

Wenn steuerseitig dem Koppelschalter Stoßströme zugeführt werden, entlädt er über seine Arbeitsausgänge den Kondensator im Gleichrichter und Integrierglied 101, so daß der Schwellwertschalter 102 der Auswerteschaltung 10 nicht ansprechen kann. Die Auslösevorrichtung 11 kann daher nicht fehlerhaft betätigt werden.

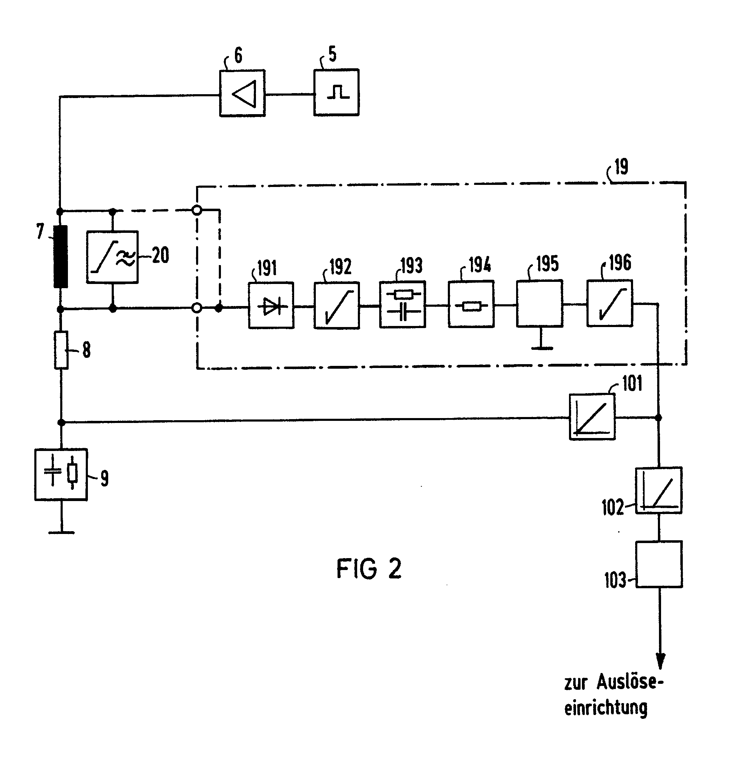

Im Sekundärkreis nach Fig. 2 eines Differnzstromschutzschalters ist der Koppelschalter 19 wie folgt aufgebaut: In Serienschaltung sind ein Zweiwegegleichrichter 191, eine Spannungsschwelle 192, z. B. eine Zenerdiode, die bei Differenzströmen im Regelbereich das Ansprechen verhindert, ein RC-Glied mit Speicherkondensator 193, ein Strombegrenzer 194, beispielsweise ein ohmscher Widerstand, und ein Optokoppelelement 195 sowie eine Strom-bzw. Spannungsbegrenzung 196 im Entladekreis des Kondensators des Gleichrichters und Intergiergliedes 101.

Ein Zweiwegegleichrichter 191 bewirkt, daß auf der Sekundärseite von Stoßströmen erzeugte positive oder negative Spannungsspitzen in gleicher Weise verarbeitet werden und zu einer gleichartigen Sperrung der Auswerteschaltung 10 führen.

Durch geeignete Bemessung des Kondensators im RC-Glied mit Speicherkondensator 193 und des Strombegrenzers 194 kann die Zeit des Stromflusses durch das Optokoppelelement 195, beispielsweise eine Lumineszenzdiode, auf eine Zeit von vorzugsweise kleiner oder gleich ein ms eingestellt werden. Während dieser Zeitdauer wird der Kondensator im Gleichrichter-und Integrierglied 101 entladen und entladen gehalten. Eine Beschränkung auf eine Zeitdauer von wenigen ms gewährleistet, daß die Auswerteschaltung 10 nicht länger als unbedingt erforderlich gesperrt bleibt. Zusätzlich kann die Sperrzeit für den Schwellwertschalter 102 reduziert werden, wenn im Entladekreis des Kondensators des Gleichrichter und Integriergliedes Strom bzw. Spannungsbegrenzer 196 eingefügt wird. Dadurch bleibt der Kondensator auf einer durch den Begrenzer bestimmten Spannung zuzüglich der Durchlaßspannung des Optokoppelelements, beispielsweise eines Fototransistors. Tiefer wird der Kondensator dann nicht entladen.

Wenn dem Filterelement 20 ein Spannungsbegrenzer parallel geschaltet ist, wird der Koppelschalter 19 selbst vor Zerstörung durch extreme Stoßströme und Überspannungen geschützt. Zugleich werden so auch die übrigen elektronischen Bauelemente geschützt.

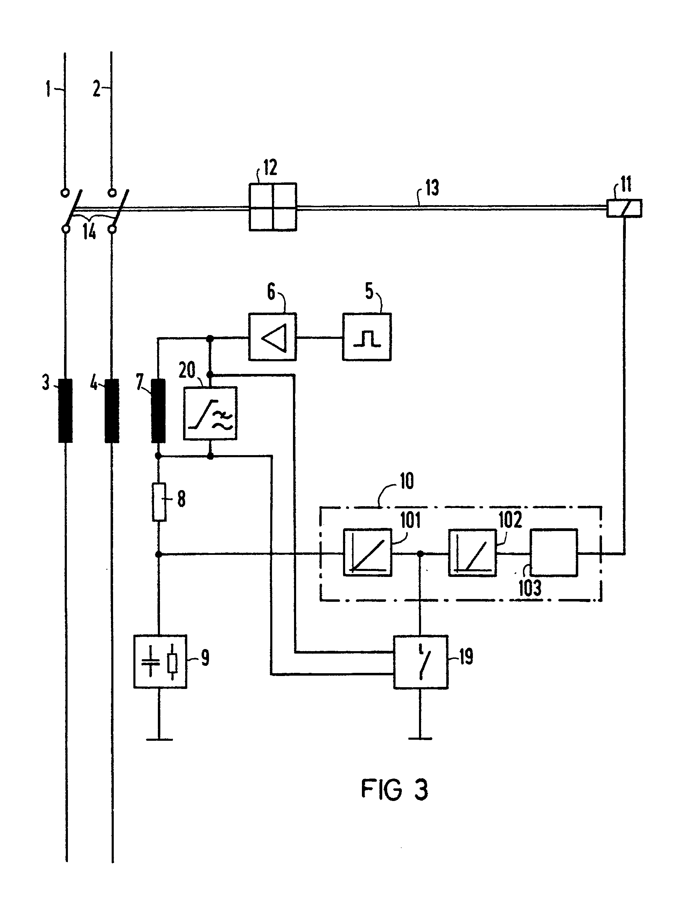

Der Koppelschalter 19 nach Fig. 3 ist mit seinen beiden Steuerleitungen an der Sekundärwicklung 7 so angeschlossen, daß diese zwischen den Anschlüssen liegt. In der Ausführung nach Fig. 1 ist die zweite Steuerleitung dagegen mit dem Bezugspotential verbunden.

**Patentansprüche**

1. Differenzstromschutzschalter nach dem Prinzip der Transduktorschaltung, dessen Sekundärwicklung (7) mit einem komplexen, überwiegend kapazitiven Meßwiderstand (9) in Serienschaltung an einem Rechteckgenerator (5) angeschlossen ist, wobei an einem Abgriff eine Auswerteschaltung (10) angeschlossen ist, die über eine Auslöseeinrichtung (11) und ein Schaltschloß (12) eine Schaltkontaktvorrichtung (14) betätigt, **dadurch gekennzeichnet, daß** die Auswerteschaltung (10) durch einen für Stroßströme bzw. Stoßspannungen ansprechenden Sensor (19) während der Zeit des Ansprechens durch eine vom Sensor gesteuerte Sperre in der Auslösung gesperrt wird.

2. Schutzschalter nach Anspruch 1, **dadurch gekennzeichnet, daß** die Auswerteschaltung (10) eine erste Stufe aus Gleichrichter- und Integrierglied (101) und eine nachgeschaltete zweite Stufe aus Schwellwertschalter (102) aufweist, zwischen denen ein gegen Bezugspotential schaltbarer Koppelschalter (19) als Sensor und Sperre zwischengeschaltet ist, der vom Potential, abgegriffen zwischen Rechteckgenerator (5) und dem komplexen Widerstand (9), gesteuert wird.

3. Schutzschalter nach Anspruch 2, **dadurch gekennzeichnet, daß** der Koppelschalter (19) mit einem Optokoppelelement (195) arbeitet, das vom Stromfluß infolge der Spannung zwischen einem Potential, abgegriffen zwischen Rechteckgenerator (5) und Sekundärwicklung (7), und Bezugspotential gesteuert wird.

4. Schutzschalter nach Anspruch 2, **dadurch gekennzeichnet, daß** der Koppelschalter (19) mit einem Optokoppelelement (195) arbeitet, das vom Stromfluß infolge der Spannung zwischen einem Potential, abgegriffen zwischen Sekundärwicklung (7) und einem Dämpfungswiderstand (8) vor dem komplexen Widerstand (9), und dem Bezugspotential gesteuert wird.

5. Schutzschalter nach Anspruch 2, **dadurch gekennzeichnet, daß** der Koppelschalter (19) steuerseitig zweipolig mit der Sekundärwicklung (7) verbunden ist und diese zwischen seinen Anschlüssen einschließt.

6. Schutzschalter nach Anspruch 4, **dadurch gekennzeichnet, daß** im Steuerkreis des Optokoppelelements (195) diesem eine Schaltung aus Zweiweggleichrichter (191), Spannungsschwelle (192), RC-Glied und Speicherkondensator (193) und Strombegrenzungswiderstand (194) eingeschaltet ist und daß im Lastkreis des Optokoppelelements (195) ein Strom-bzw. Spannungsbegrenzer (196) eingeschaltet ist.

## Claims

1. A differential current protection circuit breaker according to the principle of the transductor circuit, the secondary winding (7) of which together with a complex, predominantly capacitive measuring impedance (9), is connected in series to a square-wave generator (5), wherein connected to a tapping point there is an evaluating circuit (10), which, by way of a tripping device (11) and a switch latch, (12) activates a switching contact device (14), characterised in that the evaluating circuit (10) is blocked by a sensor (19), responsive to surge currents or surge voltages during the time of response, by a blocking device controlled by the sensor in the trip.

2. A protection circuit breaker according to claim 1, characterised in that the evaluating circuit (10) has a first stage comprising rectifier and integrating element (101) and a downstream second stage comprising threshold value switch (102), between which there is connected as sensor and blocking device a coupling switch (19), which is able to switched against a reference potential, which is controlled by the potential tapped off between the square-wave generator (5) and the complex impedance (9).

3. A protection circuit breaker according claim 2, characterised in that the coupling switch (19) operates with an optical coupling element (195), which is controlled by the current flow, as a result of the voltage between a potential, tapped off between the square-wave generator (5) and the secondary winding (7) and reference potential.

4. A protection circuit breaker according to claim 2, characterised in that the coupling switch (19) operates with an optical coupling element (195), which is controlled by a current flow as a result of the voltage between a potential, picked off between the secondary winding (7) and a damping resistor (8) before the complex impedance (9), and the reference potential.

5. A protection circuit breaker according to claim 2, characterised in that the coupling switch (19) is connected on the control side by two poles to the secondary winding (7), and contains it between its terminals.

6. A protection circuit breaker according to claim 4, characterised in that in the control circuit of the optical coupling element (195), a circuit of a full-wave rectifier (191), voltage threshold (192), RC element and storage capacitor (193) and current limiting resistor (194) is connected thereto and in that in the load circuit of the optical coupling element (195) there is connected a current or voltage limiter (196).

## Revendications

1. Interrupteur de protection à courant différentiel fonctionnant selon le principe du circuit transducteur et dont l'enroulement secondaire (7) est raccordé à une résistance de mesure complexe (9), essentiellement capacitive, branchée en série avec un générateur de signaux rectangulaires (5), et qu'à une prise est raccordée un circuit d'evaluation (10) qui, par l'intermédiaire d'un dispositif de déclenchement (11) et d'une serrure de verrouillage (12), actionne un dispositif de contacts de coupure, caractérisé par le fait que le circuit d'évaluation (10) est bloqué, dans son action de déclenchement, par un capteur (19) qui répond à des impulsions de courant et à des impulsions de tension, pendant l'intervalle de temps de réponse, par l'unité de blocage commandée par le capteur.

2. Interrupteur de protection suivant la revendication 1, caractérisé par le fait que le circuit d'évaluation (10) comprend un premier étage formé d'un circuit redresseur et intégrateur (101) et un second étage branché en aval du premier et constitué par un commutateur à valeur de seuil (102), et qu'entre ces unités est intercalé un interrupteur de couplage (19) qui constitue le capteur et l'unité de blocage, qui peut être commuté par rapport au potentiel de référence et qui est commandé par le potentiel prélevé entre le générateur de signaux rectangulaires (5) et la résistance complexe (9).

3. Interrupteur de protection suivant la revendication 2, caractérisé par le fait que l'interrupteur de couplage (19) opère avec un optocoupleur (195), qui est commandé par le flux de courant produit par la tension entre un potentiel prélevé entre le générateur de signaux rectangulaires (5) et l'enroulement secondaire (7), et le potentiel de référence.

4. Interrupteur de protection suivant la revendication 2, caractérisé par le fait que l'interrupteur de couplage (19) opère avec un optocoupleur (195) qui est commandé par le flux de courant produit par la tension entre un potentiel prélevé entre l'enroulement secondaire (7) et une

5

résistance d'amortissement (8), située en amont de la résistance complexe (9), et le potentiel de référence.

5. Interrupteur de protection suivant la revendication 2, caractérisé par le fait que, du côté de sa commande, l'interrupteur de couplage (19) est raccordé d'une manière bipolaire à l'enroulement secondaire (7) et inclut cet enroulement entre ses bornes.

6. Interrupteur de protection suivant la revendication 4, caractérisé par le fait que dans le circuit de commande de l'optocoupleur (195) est branché un circuit formé par un redresseur double alternance (191), un commutateur à seuil de tension (192), un circuit RC et un condensateur-d'accumulateur d'énergie (193) et une résistance de limitation du courant (194), et qu'un limiteur de courant ou de tension (196) est branché dans le circuit de charge de l'optocoupleur (195).

FIG 1

FIG 2

zur Auslöseeinrichtung

FIG 3